Europäisches Patentamt

European Patent Office

Office européen des brevets

(11) Veröffentlichungsnummer: **0 176 740**
**B1**

(12) **EUROPÄISCHE PATENTSCHRIFT**

(19)

(45) Veröffentlichungstag der Patentschrift:
**13.07.88**

(21) Anmeldenummer: **85110493.5**

(22) Anmeldetag: **21.08.85**

(51) Int. Cl.⁴: **A 61 C 13/269**, A 61 C 13/00

54 **Zahnprothese.**

(30) Priorität: **23.08.84 DE 3430989**

(43) Veröffentlichungstag der Anmeldung:
**09.04.86 Patentblatt 86/15**

(45) Bekanntmachung des Hinweises auf die Patenterteilung:
**13.07.88 Patentblatt 88/28**

(84) Benannte Vertragsstaaten:
**AT BE CH DE FR GB IT LI LU NL SE**

(56) Entgegenhaltungen:
**DE - A - 2 040 009**
**DE - B - 1 044 352**
**DE - U - 1 609 639**
**US - A - 1 910 292**
**US - A - 2 250 373**
**US - A - 2 641 835**
**US - A - 4 376 629**

(73) Patentinhaber: **Hofmann, Erich, Südring 10,**
**D-6234 Hattersheim (DE)**

(72) Erfinder: **Hofmann, Erich, Südring 10,**
**D-6234 Hattersheim (DE)**

(74) Vertreter: **Schmitz, Waldemar, Dipl.-Phys. et al, Schmitz**
**+ Rasper, Patentanwälte Lessingstrasse 10,**
**D-6200 Wiesbaden (DE)**

## Beschreibung

Die Erfindung betrifft eine Zahnprothese.

Zahnprothesen sind in den verschiedensten Ausführungen bekannt. Mit allen Ausführungen wird versucht, das Problem des festen Sitzes einer Zahnprothese zu lösen. So ist es bekannt, Oberkieferprothesen mit Gaumenplatten zu versehen, die durch Saughaftung an der Oberkieferfläche des Trägers anhaften sollen. Eine solche bei Oberkieferprothesen in gewissem Umfang vorhandene Saughaftung ist bei Unterkieferprothesen nicht vorhanden. Dort steht nur ein relativ schmaler Streifen im Bereich der Zahnreihe als Berührungsfläche zur Verfügung. Dieser Streifen ist zu klein und ungleichförmig, um eine Saughaftung zu erreichen.

Es wird deshalb schon versucht, eine Zwischenlage aus Weichgummi einen Saugeffekt zu erreichen, aber ohne befriedigenden Erfolg. Auch der Versuch, kleine Permanentmagnete in die Prothese einzusetzen und in das Zahnfleisch entsprechende Gegenmagnete einzupflanzen, scheiterte an der schwachen Magnetwirkung.

Gemäss einem anderen Vorschlag werden die beiden Hinterenden der Unterkieferprothese mit den gegenüberliegenden Enden der Oberkieferprothese durch je eine Federklammer verbunden. So ist in einer bekannten Ausführung je eine enggewundene Schraubenfeder mit ihren Enden in die Prothesenmasse eingebettet dergestalt, dass bei weitester Mundöffnung die freiliegenden Zwischenstrecken dieser Federn gestreckt und ungespannt sind. Beim Schliessen des Mundes wölben sich diese Zwischenstrecken nach hinten aus. Die Haltewirkung ist bei dieser Ausführung jedoch nur gering und sie verhindert ein Lösen und Schwimmen der Unterkieferprothese nicht, bewirkt aber in vielen Fällen ein Wundwerden des Zahnfleischs im Spielbereich der Federn.

Eine andere bekannte Ausführung sieht eine Bügelfeder vor, die aus einem rundgebogenen Federstab besteht, dessen abgekröpfte Enden von hinten her in Kanäle der Prothesenenden eingeschoben sind. Bei voller Mundöffnung sind diese Bügelfedern weitgehend entspannt und sie spannen sich − indem sie sich nach hinten weiter durchwölben − um so mehr, je weiter der Mund geschlossen wird.

Aber auch diese Ausführung weist sehr beachtliche Nachteile auf: vor allem hat sie die unangenehme Wirkung, dass sich oft bei jedem Schliessen des Mundes die Unterkieferprothese vorne abhebt und gewissermassen hochschnappt, da der relativ starke Federdruck an die Hinterenden der Prothese angreift und sie über das relativ weich-elastische Zahnfleisch quasi abwälzt, so dass sie sich vorne anhebt. Dieser Umstand ist besonders beim Sprechen, aber auch beim Essen äusserst lästig. Ein weiterer Nachteil besteht darin, dass auch bei dieser Ausführung ein Wundwerden des Zahnfleischs eintreten kann und dass sich bei den auftretenden Kieferbewegungen die Bügelfedern aus ihren Verankerungskanälen herausarbeiten können, so dass sie dann lose im Mund liegen und verschluckt werden können.

Aufgabe der Erfindung ist es, diese Nachteile zu vermeiden und durch eine armspangenartige Wirkung ein festes Anhaften der Prothese auch am Unterkiefer zu erreichen, ohne dass der Mundraum durch Halteelemente eingeengt wird.

Die Erfindung ist gekennzeichnet durch eine Unterteilung der Prothese und durch mindestens eine Drehstabfeder, die in dem einen Prothesenteil befestigt und mit dem anderen Prothesenteil verbunden ist. Durch das Drehmoment der Feder tritt eine Hebelwirkung ein, die im Gegesatz zu den bekannten Federprothesen quer zum Gaumen und nicht längs wirkt. Durch das Verschwenken der beiden Prothesenteile gegeneinander ist eine sichere und feste Anlage der Prothese gewährleistet.

Vorteilhafterweise erstreckt sich die Drehstabfeder nur über einen Teil des Kammverlaufs und ist mit einer Verlängerung versehen, die entsprechend dem restlichen Kammverlauf gebogen ist.

Das Biegen der Verlängerung erfolgt auf bekannte Weise.

Feder und Verlängerung bestehen vorzugsweise aus einem Stück, wobei die Verlängerung entsprechend bearbeitet ist, so dass sie gebogen werden kann.

Es liegt aber auch im Rahmen der Erfindung die Verlängerung als separaten Teil auszubilden. Die Verbindung zwischen Drehstabfeder und Verlängerung kann z. B. durch Stifte erfolgen oder auch durch Kleben, Schrumpfen oder Elektronenstrahlschweissen.

Die gesamte Einheit Feder/Bügel kann oberflächlich freiliegend angebracht werden, wenn vorhandene Zahnpositionen eine Befestigung gestatten oder erfordern. Besonders vorteilhaft ist es aber, wenn erfindungsgemäss das gesamte Element in die Prothesenmasse eingebettet wird. Dies hat den Vorteil, dass das Element in besonders hygienischer Weise mit der Prothese verbunden ist. Ferner ist ein sicherer Halt des Elements an der Prothese gewährleistet, da es mit dieser fest verbunden ist. Ausserdem bleibt der Mundraum unbeeinflusst von dem Element, so dass dieser gegenüber den bekannten Befestigungselementen, z. B. Saugplatte, grösser bleibt.

Durch die erfindungsgemässe Ausgestaltung und Anordnung des Befestigungselementes (Drehstabfeder mit Verlängerung) ist dessen Verwendung auch bei Unterkieferprothesen möglich, wo in der Regel − wenn überhaupt − nur ein geringer Halt erzielt wird. Hierin liegt ein besonderer Fortschritt der Erfindung.

Die Gesamtlänge von Drehstabfeder und Verlängerung liegt im Bereich von 100 mm bei Ganzprothesen bzw. Totalprothesen.

Bei Teilprothesen ist die Gesamtlänge entsprechend geringer. Erfindungsgemäss beträgt die Länge der Drehstabfeder etwa der halben Länge der Verlängerung. D.h. die Federlänge liegt im Bereich von etwa 20−35 mm. Der Verdrehwinkel der Feder beträgt 10−20 Grad im allgemeinen.

Besonders vorteilhaft ist es, wenn die Länge der Drehstabfeder etwa der Länge des geraden Prothesenteiles entspricht.

Als Federmaterial wird vorzugsweise ein Ni Cr 20 Co 18 Ti Stahl verwendet oder ein anderer nichtrostender Federstahl, der physiologisch unbedenklich und biologisch verträglich ist. Obwohl das Befestigungselement voll in der Prothesenmasse eingebettet ist, sollten diese Merkmale beachtet werden.

Gemäss einem weiteren Vorschlag der Erfindung ist die Prothese zweckmässigerweise im Bereich des Beginns der Verlängerung unterteilt und zwar etwa senkrecht zu dieser. Diese Stelle hat sich für die Unterteilung Festlager/Hebelarm am geeignetsten erwiesen.

Nach einem anderen Vorschlag der Erfindung weist die Prothese zwei Drehstabfedern auf, die an den Enden der Prothese befestigt sind. Diese Drehstabfedern können mit je einer Verlängerung versehen sein, deren Enden sich etwa in Prothesenmitte gegenüberliegen. Gemäss der Erfindung weisen die beiden Drehstabfedern eine gemeinsame Verlängerung auf. Durch die Anbringung von zwei Drehstabfedern wird die Anpresswirkung erhöht. Hierbei kann die Federwirkung gegenläufig eingestellt werden.

Nach einer weiteren Lehre der Erfindung ist die Drehstabfeder mit ihrem einen Ende in einer Hülse befestigt. Dies hat den Vorteil, dass eine sichere Befestigung der Drehstabfeder durch Pressitz, Rändelung oder Verstiftung gewährleistet ist. Die rohrförmige Hülse ist am anderen Ende mit einer O-Ring-Dichtung versehen.

Die Erfindung findet ihre Anwendung primär bei Totalprothesen, wenn kein Zahn mehr im Ober- und/oder Unterkiefer vorhanden ist. Sie ist aber auch bei Teilprothesen anwendbar, wenn die Zahnpositionen des Restgebisses dies räumlich zulassen.

Ein Ausführungsbeispiel der Erfindung ist in der Zeichnung dargestellt.

Fig. 1 zeigt eine Oberkieferprothese gemäss der Erfindung und

Fig. 2 die Drehstabfeder.

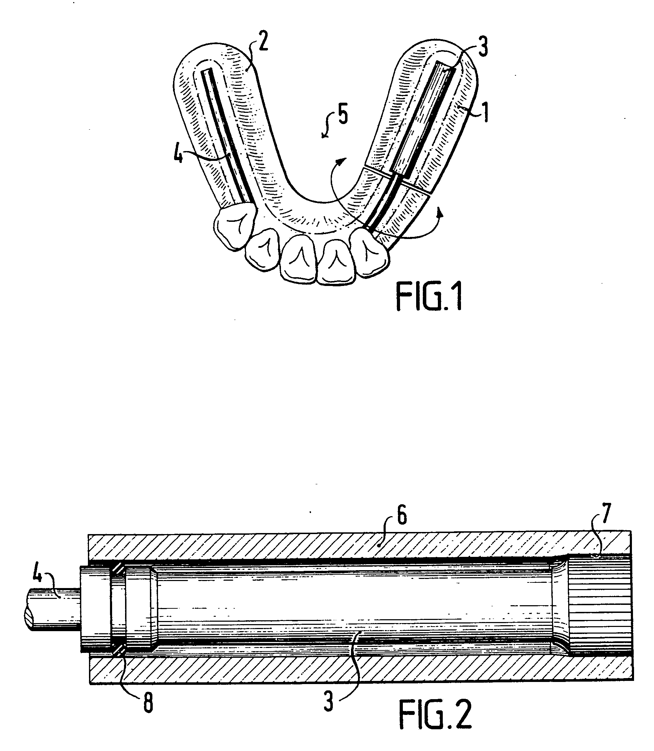

Die Prothese gemäss Fig. 1 besteht aus zwei Hälften 1 und 2. In dem Teil 1 ist die Drehstabfeder 3 eingebettet. Im Teil 2 befindet sich die Verlängerung 4. Die Figur zeigt auch, dass durch die Erfindung der Mittelbereich 5 der Prothese offen gehalten werden kann, welches für den Prothesenträger als angenehm empfunden wird, da die Saugplatte wegfällt.

Fig. 2 zeigt die Anordnung der Drehstabfeder 3 in einer Hülse 6. Die Feder ist an dem einen Ende der Hülse 6 durch Pressitz 7 befestigt. Am anderen Ende ist die Hülse durch einen O-Ring 8 abgedichtet. Mit der Feder ist eine Verlängerung 4 verbunden. Diese Verlängerung wird von dem Zahntechniker der Hufeisenform der jeweiligen Prothese angepasst.

Erfindungsgemäss kann neben dem O-Ring 8 ein Gleitlager vorgesehen werden, um einen übermässigen Verschleiss der Drehstabfeder (3) an dieser Stelle zu verhindern.

Die Prothese sollte, von der Federdrehachse ausgehend – also vom Schwenkpunkt aus – ganz leicht V-förmig aufliegen, um den Druck auf die Kammlinie zu lenken.

Bei der Einbettung (bzw. anderweitigen Befestigung) der Feder muss der zulässige Überdrehen und damit Zerstörung des Federstabes zu verhindern, empfiehlt sich in der Gestaltung der beiden sich gegeneinander drehenden Prothesenteile ein Anschlag, der dies beim Spannen und Einsetzen der Prothese verhindert. (Z. B. konisch zueinander verlaufende Stirnflächen der Prothesenteile.)

## Patentansprüche

1. Zahnprothese, gekennzeichnet durch eine Unterteilung der Prothese und durch mindestens eine Drehstabfeder (3), die in dem einen Prothesenteil (1) befestigt und mit dem anderen Prothesenteil (2) verbunden ist.

2. Zahnprothese nach Anspruch 1, dadurch gekennzeichnet, dass sich die Drehstabfeder (3) nur über einen Teil des Kammverlaufs erstreckt und eine Verlängerung (4) aufweist, die entsprechend dem restlichen Kammverlauf gebogen ist.

3. Zahnprothese nach Anspruch 2, dadurch gekennzeichnet, dass die Drehstabfeder (3) und die Verlängerung (4) aus einem Stück sind.

4. Zahnprothese nach einem der Ansprüche 1 bis 3, dadurch gekennzeichnet, dass die Drehstabfeder (3) und/oder die Verlängerung (4) in die Prothesenmasse eingebettet sind.

5. Zahnprothese nach einem der Ansprüche 1 bis 3, dadurch gekennzeichnet, dass die Länge der Drehstabfeder (3) etwa die halbe Länge der Verlängerung (4) aufweist.

6. Zahnprothese nach einem der Ansprüche 1 bis 4, dadurch gekennzeichnet, dass die Länge der Drehstabfeder (3) der Länge des geraden Prothesenlaufes entspricht.

7. Zahnprothese nach einem der Ansprüche 1 bis 5, dadurch gekennzeichnet, dass die Prothese im Bereich des Beginns der Verlängerung (4) und zwar etwa senkrecht zu dieser unterteilt ist.

8. Zahnprothese nach Ansprüche 2, dadurch gekennzeichnet, dass mehrere Drehstabfedern in die Prothese eingebettet und mit einer gemeinsamen Verlängerung (4) verbunden sind.

9. Zahnprothese nach einem der Ansprüche 1 bis 8, dadurch gekennzeichnet, dass die Drehstabfeder (3) mit ihrem einen Ende in einer Hülse (6) befestigt ist.

## Claims

1. Dental prosthesis characterised by a partition of the prosthesis and by at least one torsion-bar spring (3) which is secured to one part (1) of the prosthesis and connected to the other part (2) of the prosthesis.

2. Dental prosthesis according to claim 1, characterised in that the torsion-bar spring (3) extends only a part of the ridge run and comprises an extension (4) which is bent according to the remaining ridge run.

3. Dental prosthesis according to claim 2, characterised in that the torsion-bar spring (3) and the extension (4) consist all of a piece.

4. Dental prosthesis according to one of claims 1 to 3, characterised in that the torsion-bar spring (3) and/or the extension (4) are embedded in the prosthesis mass.

5. Dental prosthesis according to one of claims 1 to 3, characterised in that the length of the torsion-bar spring (3) is about half the length of the extension (4).

6. Dental prosthesis according to one of claims 1 to 4, characterised in that the length of the torsion-bar spring (3) corresponds to the length of the straight run of the prosthesis.

7. Dental prosthesis according to any of claims 1 to 5, characterised in that the prosthesis is subdivided, in the region of the beginning of the extension (4) essentially normally thereto.

8. Dental prosthesis according to claim 2, characterised in that a plurality of torsion-bar springs are embedded in the prosthesis and connected with a common extension (4).

9. Dental prosthesis according to one of claims 1 to 8, characterised in that the torsion-bar spring (3) is secured in a sleeve (6) with its one end.

**Revendications**

1. Prothèse dentaire, caractérisée par une division de la prothèse et par au moins un ressort en barre de torsion (3), qui est fixé dans une partie (1) de la prothèse et qui est relié à l'autre partie (2) de la prothèse.

2. Prothèse dentaire selon la revendication 1, caractérisé en ce que le ressort en barre de torsion (3) s'étend seulement sur une partie du profil de denture et comporte un prolongement (4) qui est cintré en correspondance au reste du profil de denture.

3. Prothèse dentaire selon la revendication 2, caractérisée en ce que le ressort en barre de torsion (3) et le prolongement (4) forment une seule pièce.

4. Prothèse dentaire selon une des revendications 1 à 3, caractérisée en ce que le ressort en barre de torsion (3) et/ou le prolongement (4) sont logés dans la matière de prothèse.

5. Prothèse dentaire selon une des revendications 1 à 3, caractérisée en ce que la longueur du ressort en barre de torsion (3) est à peu près la moitié de la longueur du prolongement (4).

6. Prothèse dentaire selon une des revendications 1 à 4, caractérisée en ce que la longueur du ressort en barre de torsion (3) correspond à la longueur du profil rectiligne de prothèse.

7. Prothèse dentaire selon une des revendications 1 à 5, caractérisée en ce que la prothèse est divisée dans une zone de début du prolongement (4), et notamment à peu près perpendiculairement à celui-ci.

8. Prothèse dentaire selon la revendication 2, caractérisée en ce que plusieurs ressorts en barres de torsion sont noyés dans prothèse sont reliés à un prolongement commun (4).

9. Prothèse dentaire selon une des revendications 1 à 8, caractérisée en ce que le ressort en barre de torsion (3) est fixé par une extrémité dans un fourreau (6).

FIG.1

FIG.2